# EUROPÄISCHE PATENTSCHRIFT

(11) **EP 2 489 592 B1**
(45) Veröffentlichungstag und Bekanntmachung des Hinweises auf die Patenterteilung: **16.09.2015**
(21) Anmeldenummer: 12154806.9
(22) Anmeldetag: 10.02.2012
(51) Int. Cl.: B64F 1/22

(54) **Schleppstange**
Towbar
Barre de remorquage

(30) Priorität: 15.02.2011 DE 202011002748 U
(43) Veröffentlichungstag der Anmeldung: 22.08.2012
(73) Patentinhaber: JMS AG, 77933 Lahr/Schwarzwald (DE)
(72) Erfinder: Mikowski, Lothar, 77746 Schutterwald (DE)
(74) Vertreter: Weickmann & Weickmann

(56) Entgegenhaltungen:
- DE-U1- 8 605 706
- US-A- 2 468 669

## Beschreibung

### I. Anwendungsgebiet

Die Erfindung betrifft eine Schleppstange, mittels der z. B. auf dem Flughafenvorfeld Luftfahrzeuge, etwa Flugzeuge, rangiert werden, indem die Schleppstange einerseits am Bugfahrwerk des Flugzeuges befestigt wird und andererseits an einem Zugfahrzeug, insbesondere einem Rangier-Traktor, und mittels des Traktors das Flugzeug in die gewünschte Position geschoben oder gezogen werden kann.

### II. Technischer Hintergrund

Dabei besteht das Problem, dass der Traktor sowohl Zug- als auch Schubkräfte aufbringen kann, durch die das Bugfahrwerk, an dem die Schleppstange angreift, überlastet und beschädigt werden kann.

Um dies zu vermeiden, ist in der Schleppstange eine Sollbruchstelle in Form eines Scherbolzens eingebaut, dessen Abscherkraft niedriger liegt als ein vom Flugzeughersteller vorgegebener maximal zulässiger Belastungswert für das Bugfahrwerk des jeweiligen Flugzeugtyps. Dementsprechend muss die Sollbruchstelle und damit der Scherstift für jeden Flugzeugtyp exakt dimensioniert sein Diese Art von Schleppstangen ist aus den Dokumenten DE-U1-8605706 und US-A1-2468669 bekannt.

Um nicht für jeden Flugzeugtyp eine separate Schleppstange zu benötigen, ist es bekannt, in eine Schleppstange hinsichtlich der Abscherkraft unterschiedlich dimensionierte Scherstifte einzusetzen und dadurch die Schleppstange für unterschiedliche Flugzeugtypen einsetzen zu können.

Dabei wird am freien Ende des Basiskörpers der Schleppstange mittels eines bzw. eines Paares baugleicher Scherstifte ein Schleppkopf befestigt, der die Kupplung zum anzukuppelnden Fahrzeug, meist dem Flugzeug, trägt. Für unterschiedlich dimensionierte Scherstifte sind im Basiskörper und Schleppkopf unterschiedlich dimensionierte, zueinander fluchtende Durchgangsbohrungen vorhanden und bei einem paarweisen Einsatz von Scherstiften unterschiedliche Paare von Durchgangsbohrungen.

Diese Lösung weist jedoch mehrere Nachteile auf:
- Zum einen müssen beim Umrüsten der Schleppstange von einem auf einen anderen Flugzeugtyp die in einem ersten Paar von Durchgangsbohrungen steckenden Scherstifte entnommen werden und stattdessen in das andere Paar von Durchgangsöffnungen ein anderes Paar von passenden Scherstiften eingesetzt werden. Dies bedeutet Handarbeit, indem zunächst einmal die Auszugssicherung an jedem Scherstift entfernt werden muss, die i. d. R. in einer selbstsichernden, endseitig auf dem Scherstift gegenüberliegend von seinem verbreiterten Kopf aufgeschraubten, selbstsichernden Mutter besteht.
- Hierfür ist Werkzeug notwendig, welches der Bediener erst holen muss. Vor allem bei schlechten Witterungsverhältnissen sind diese Arbeiten im Freien auf dem Vorfeld gar nicht möglich, so dass zum Umrüsten die Schleppstange erst in einen Hangar gebracht werden muss und dort erst umgebaut werden kann.
- Des Weiteren ist diese Umbaumaßnahme fehleranfällig, indem beispielsweise in eine Durchgangsbohrung ein falscher Scherstift, beispielsweise mit einem zu kleinen Durchmesser, eingesetzt werden könnte.
- Ein weiterer Nachteil ist die Situation beim Brechen eines der Scherstifte aufgrund zu hoher Belastung: Der Bruch erfolgt dann an den im Verlauf des Schaftes vorgesehenen Sollbruchstellen des Scherstiftes, also an den Kontaktflächen des ineinander geschobenen Basiskörpers und Schleppkopfes.

Bei einem Bruch des Scherstiftes fällt in aller Regel der untere Teil aus der Durchgangsbohrung heraus, und bei einem Bruch des Scherstiftes in mehrere Teile kann dies auch mehr als ein Teil sein, welches auf den Untergrund, also das Flughafenvorfeld, fällt.

Da der Bruch in der Regel während des Fahrens geschieht und auch nicht immer sofort bemerkt wird, muss anschließend zeitaufwändig das Vorfeld so lange abgesucht werden, bis alle herab gefallenen Teile des gebrochenen Scherstiftes gefunden sind, denn jedes liegen gebliebene Teil kann Beschädigungen an einem Flugzeug hervorrufen, sei es sich in einen Reifen eindrücken und dort ein Platzen des Reifens bei der nächsten Landung bewirken oder von einen Triebwerk angesaugt werden und zu einer Beschädigung des Triebwerkes führen. Damit führt jeder Bruch eines Scherstiftes sehr häufig zu zeitaufwändigem Zusatzmaßnahmen.
- Ein weiterer Nachteil ist, dass die als Auszugssicherung aufgeschraubte Mutter zu stark angezogen werden kann, und dadurch der Scherstift in Stiftrichtung unter Vorspannung gesetzt wird, was die Abscherkraft in Querrichtung des Scherstiftes verändert.

### III. Darstellung der Erfindung

### a) Technische Aufgabe

Es ist daher die Aufgabe gemäß der Erfindung, eine Schleppstange zur Verfügung zu stellen, die einfach und ohne Werkzeug von einem Flugzeugtyp auf einen oder mehrere andere umgestellt werden kann und bei der im Falle eines Bruches des Scherstiftes keine Teile aus der Schleppstange herausfallen und der Austausch des Scherstiftes ohne Werkzeug möglich ist.

### b) Lösung der Aufgabe

Diese Aufgabe wird durch die Merkmale des Anspruchs 1 gelöst. Vorteilhafte Ausführungsformen ergeben sich aus den Unteransprüchen.

Die Schleppstange kann gemäß Anspruch 1 auf einen von mehreren unterschiedlichen Abscherwerten und damit Flugzeugtypen eingestellt werden, indem der Scherstift im Schleppkopf in seiner Längsrichtung verstellt wird und damit eine bestimmte von mehreren, hinsichtlich des Abscherwertes, unterschiedlichen Sollbruchstellen des Scherstiftes zum Einsatz kommen.

Eine Sollbruchstelle kann bekanntermaßen durch eine quer zur Stiftrichtung verlaufende Scherkerbe im Außenumfang des Scherstiftes gebildet werden, die vorzugsweise über den gesamten Umfang des Scherstiftes läuft. Der Scherstift hat in der Regel eine runde Querschnittskontur.

Damit der Scherstift nur bis zu einer Maximalposition in den Schleppkopf eingeschoben werden kann, besitzt er einen verbreiterten Kopf, der als Anschlag beim maximalen Einschieben dient. Der an den Kopf anschließende Schaft des Scherstiftes besitzt vorzugsweise einen gleich bleibenden Durchmesser, bis auf den Bereich der Scherkerben, die ja gezielt den Schaftdurchmesser auf einen den Abscherwert bestimmenden Kerndurchmesser beschränkt.

Da die Einleitung von Querkräften in den Scherstift primär an der Kontaktfläche derjenigen beiden Bauteile, die mittels des hindurch gesteckten Scherstiftes miteinander verbunden werden, also von Basiskörper und Schleppkopf, eingeleitet werden, ist nur diejenige Scherkerbe und deren Abscherwert wirksam, die sich in der Ebene dieser Kontaktfläche befindet.

Häufig ist entweder der Basiskörper oder der Schleppkopf an dem zum anderen Bauteil weisenden Ende gabelförmig ausgebildet und das jeweils andere Bauteil wird dann zwischen die gabelförmigen Enden geschoben, sodass es zwei zueinander beabstandete Kontaktflächen gibt. Dann werden am Scherstift für jeden Flugzeugtyp, also jeden Abscherwert nicht eine, sondern zwei zusammengehörige Scherkerben angeordnet, deren Abstand dem Abstand dieser Kontaktflächen entspricht.

Die zwei oder mehr Paare von Scherkerben sind dann in Längsrichtung des Scherstiftes zueinander versetzt, wobei eine Scherkerbe des einen Paares durchaus zwischen den Scherkerben des anderen Paares liegen kann, also der Versatz zwischen den Paaren geringer, sogar deutlich geringer sein kann als der Abstand zwischen den beiden Scherkerben eines zusammengehörigen Paares mit gleichen Abscherwerten.

Um sicher zu stellen, dass die gewünschte Scherkerbe mit dem gewünschten Abscherwert oder die einzige Scherkerbe auf Höhe der Kontaktfläche zwischen Schleppkopf und Basiskörper eingestellt ist, ist Kopfseitig oder Endseitig bezüglich des Scherstiftes eine Positioniervorrichtung angeordnet.

Diese weist vorzugsweise eine Rastvorrichtung auf, die durch Einrasten am Scherstift diesen in einer bestimmten Position in seiner Längsrichtung relativ zu einem der beiden zu verbindenden Bauteile, also Basiskörper oder Schleppkopf, hält.

Zu diesem Zweck besitzt der Scherstift vorzugsweise für jede Rastposition eine Positionierkerbe - also bei nur einer Rastposition auch nur eine Positionierkerbe -, die quer zur Längsrichtung eines Stiftes und insbesondere Ringförmig umlaufend in dessen Umfang angeordnet ist, und in welche ein radial nach innen gegen die Mitte des Scherstiftes vorgespanntes Rastelement einrasten kann. Das Rastelement kann ein federvorgespannter Stift oder eine federvorgespannte Rastkugel sein, die in einer den Scherstift umgebenden Positionierhülse quer zur Stiftrichtung geführt ist.

Die Federkraft des Rastelements ist dabei so bemessen, dass durch Verlagern des Scherstiftes in Stiftrichtung dass eingerastete Rastelement automatisch aus der Positionierkerbe, in der es eingerastet ist, ausrastet und gegebenenfalls in die nächste Positionierkerbe einrastet, wenn es diese erreicht.

An dem Scherstift ist an dem den Kopf des Scherstiftes gegenüberliegenden freien Ende weiterhin eine Auszugssicherung angeordnet, die verhindert, dass der Scherstift beim Ziehen am Kopf zum Verändern seiner Längsposition unbeabsichtigt ganz aus Basiskörper und Schleppkopf abgezogen wird. Die Auszugssicherung besteht beispielsweise in einer Querbohrung im Scherstift zum Hindurchschieben eines Sicherungsstiftes nahe dem freien Ende. Der Scherstift muss hierfür natürlich eine solche Länge besitzen, dass er mit seinem freien Ende und dieser Querbohrung ausreichend weit in jeder der einstellbaren Rastpositionen aus Basiskörper und Schleppkopf vorsteht.

Als Auszugssicherung können jedoch auch andere Elemente dienen wie Beispielsweise eine auf das freie Ende und ein dortiges Außengewinde aufgeschraubte Sicherungsmutter, die vorzugsweise selbstsichernd sein sollte, sofern das Außengewinde soweit beabstandet von der Führungshülse und den Rastelementen endet, dass auch beim vollständigen Festziehen der Mutter keine unzulässige Vorspannung in Längsrichtung auf den Scherstift ausgeübt wird. Da eine Schleppstange nicht nur Kräfte in Längsrichtung der Schleppstange auf das Flugzeug übertragen kann, sondern auch Drehmomente um eine parallel zur Längsrichtung des Scherstiftes verlaufende Achse, sind vorzugsweise zwei Scherstifte parallel und beabstandet zueinander, nämlich auf je einer Seite der Längsmitte der Schleppstange in dieser angeordnet, vorzugsweise im gleichen Abstand zur Längsmitte.

Unabhängig davon, ob die Scherstifte einzeln oder paarweise vorhanden sind, ist zwischen Basiskörper und Schleppkopf zusätzlich ein, gegenüber dem wenigstens einen Scherstift eine höhere Abscherkraft aufweisender, Fangbolzen als Verbindungselement zwischen Basiskörper und Schleppkopf vorhanden. Dieser hält die Verbindung, wenn der wenigstens eine Scherstift abschert, und ist auf einen Abscherwert dimensioniert, bei dem dennoch noch keine zumindest ernsthafte Beschädigung am Flugzeug auftritt. Bei paarweise angeordneten Scherstiften befindet sich der Fangbolzen auf der Längsmitte der Schleppstange.

Das Eingeschobene der beiden ineinander geschobenen Bauteile, also Basiskörper oder Schleppkopf, umgreift dabei den Fangbolzen ringförmig.

Der wenigstens eine Scherstift ist vorzugsweise nicht direkt in Basiskörper und Schleppkopf geführt sondern über Führungshülsen die sich zum Beispiel in den beiden gabelförmigen Enden des Grundkörpers befinden. Eine der Führungshülsen kann dabei die Positionierhülse sein, in der die Rastelemente in radialer Richtung geführt sind. Damit der Kopf des Scherstiftes gut ergriffen und in Längsposition des Stiftes verlagert werden kann, weist der Kopf des Scherstiftes nahe seinem freien Ende eine weitere Schulter mit einer nochmaligen Durchmesserverbreiterung auf, der insbesondere als durchgreifbarer Handgriff ausgebildet ist.

Auf diese Art und Weise müssen für Scherstifte, die auf unterschiedliche Abscherwerte hin dimensioniert sind, auch keine hinsichtlich des Durchmessers unterschiedlich dimensionierten Durchgangsöffnungen in Basiskörper und/oder Schleppkopf benötigt, sondern es gibt nur eine Sorte von Durchgangsöffnungen für die Scherstifte mit gleichem Durchmesser, vorzugsweise ein Paar von Durchgangsöffnungen.

Zur leichteren Einstellbarkeit des Scherstiftes sind an dessen Schaft, vorzugsweise im oberen Bereich, Markierungen in Stiftrichtung beabstandet angeordnet für den jeweiligen Abscherwert, beziehungsweise Flugzeugtyp.

Aus Sicherheitsgründen sind weiterhin die Scherkerben, die einen geringeren Abscherwert repräsentieren, über den entsprechenden Scherkerben mit höherem Abscherwert angeordnet.

### c) Ausführungsbeispiele

Ausführungsformen gemäß der Erfindung sind im Folgenden beispielhaft näher beschrieben. Es zeigen:
- Fig. 1a:: den Einsatz der Schleppstange,
- Fig. 1b:: eine vergrößerte Darstellung des Schleppkopfes der Schleppstange, gemäß dem Stand der Technik,
- Fig. 1c:: einen Schnitt durch die Verbindungsstelle zwischen Schleppkopf und Basiskörper gemäß dem Stand der Technik,
- Fig. 2a:: einen Schnitt durch diese Verbindungsstelle gemäß der Erfindung,
- Fig. 2b:: einen Scherstift gemäß der Erfindung,
- Fig. 3a, b: unterschiedliche Funktionszustände eines Scherstiftes.

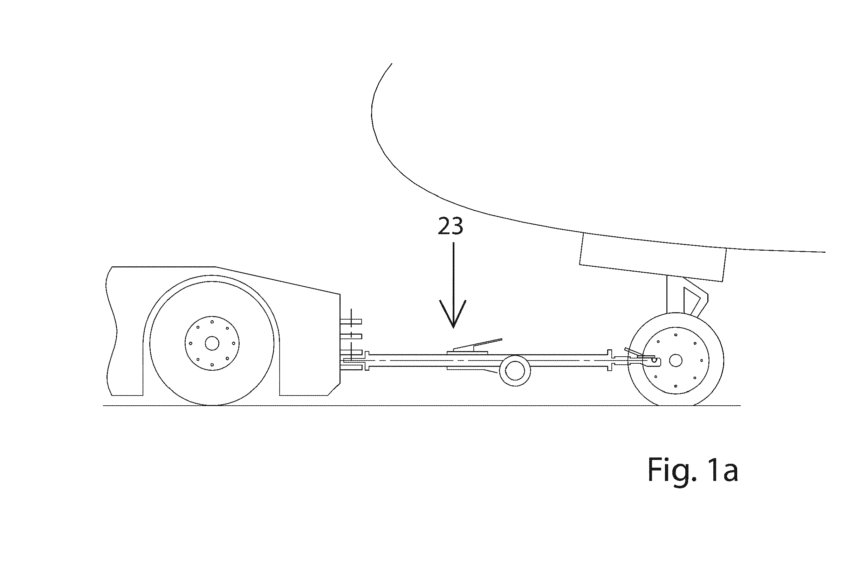

In Figur 1a ist der Einsatz einer Schleppstange 23 für Flugzeuge zu sehen, die mit einem Ende am Bugfahrwerk eines Flugzeuges angekuppelt ist und mit dem anderen Ende an der Anhängekupplung eines Rangier-Traktors.

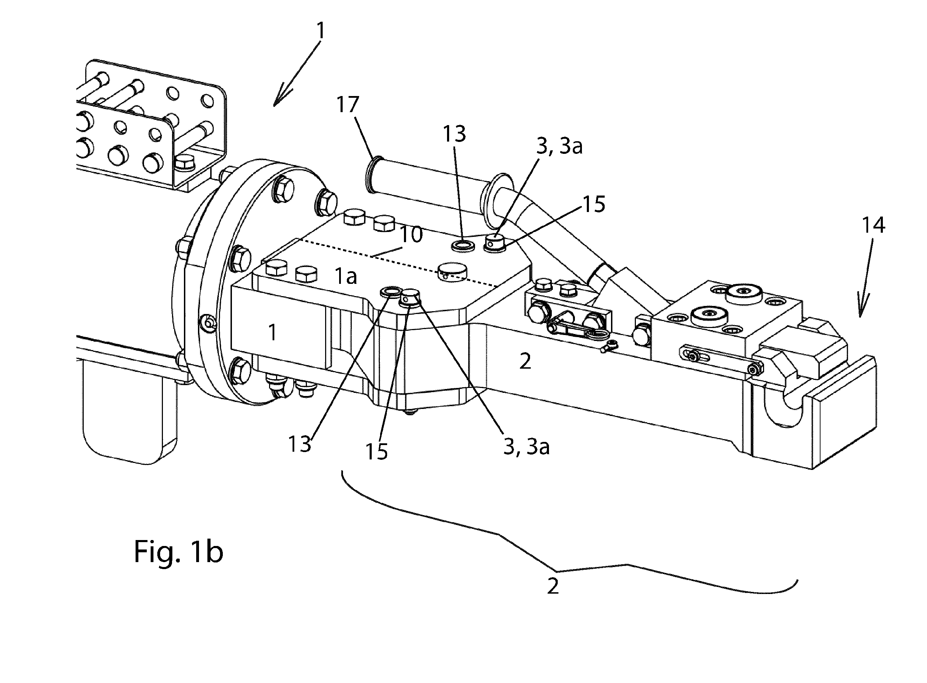

In Figur 1b ist in vergrößerter Darstellung der Schleppkopf 2 der Schleppstange 23 zu sehen, der an seinem freien Ende eine Kupplung 14 zum Ankuppeln am Bugfahrwerk des Fahrzeuges aufweist. Diese Kupplung 14 kann durch Hochziehen des Handgriffes 17 geöffnet werden.

Der Basiskörper 1 der Schleppstange 23 weist zueinander beabstandete, obere und untere Basisplatten 1a, 1 b auf, zwischen welche das hintere Ende des Schleppkopfes 2 hineinpasst.

Im passend ineinander geschobenen Zustand dieser beiden Bauteile sind beide Bauteile durchdringende Paare von Durchgangsöffnungen jedes Paares 13, 15 vorhanden, wobei je eine Durchgangsöffnung auf den beiden gegenüber liegenden Seiten der Längsmitte 10 angeordnet ist. In den beiden Durchgangsöffnungen 13 befindet sich jeweils ein Scherstift 3, dessen Abscherwert, also Bruchspannung, die maximal von dem Basiskörper 1 auf den Schleppkopf 2 und damit das Bugfahrwerk des Flugzeuges übertragbare Belastung begrenzt, da die Scherstifte 3 bei einer höheren Belastung brechen.

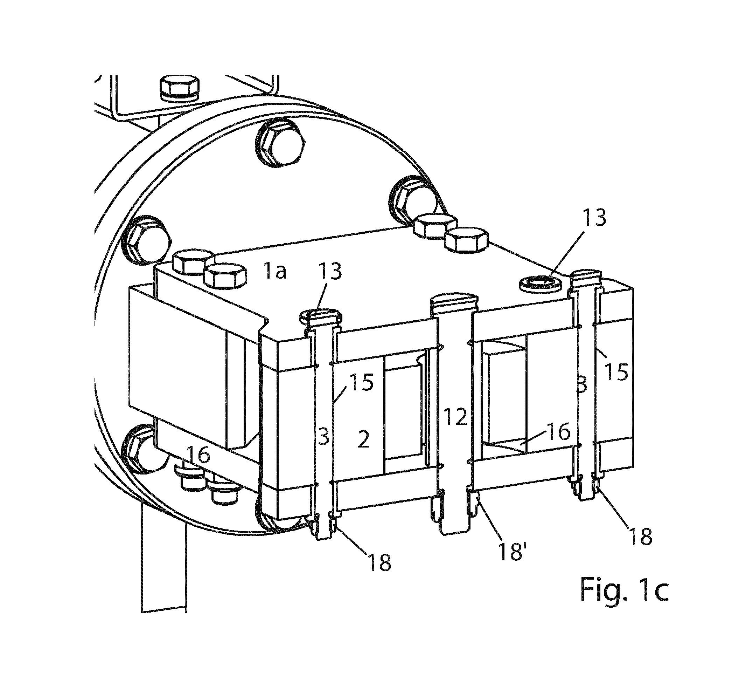

In der Mitte, also auf der Längsmitte 10, ist weiterhin eine gegenüber dem beschriebenen Durchgangsöffnungen 13, 15 sehr viel größere Zentralöffnung 16 für einen Fangbolzen 12 vorhanden, dessen Funktion darin besteht, beim Brechen der Scherstifte 3 die Verbindung zwischen Schleppkopf 2 und Basiskörper 1 nicht zu verlieren. Zu diesem Zweck ist im Schleppkopf 2 eine größere Zentralöffnung vorhanden als für den Durchmesser des Fangbolzens 12 notwendig, wie in Figur 1c zu erkennen, da in diesem Bereich der Fangbolzen 12 von einer Hülse, meist aus Kunststoff bestehend, mit größerem Durchmesser umgeben ist.

Da in der Kupplung 14 ein quer zur Längsrichtung 10 der Schleppstange 23 liegender, nicht dargestellter Bügel des Bugfahrwerkes des Flugzeuges aufgenommen wird, können auf das Bugfahrwerk nicht nur in Längsrichtung 10 wirkende Zug- und Schubkräfte übertragen werden, sondern auch um eine Hochachse wirkende Drehmomente.

Um auch diese zu begrenzen, sind die Durchgangsöffnungen 13, 15 in einem definiertem Abstand von der Längsmitte 10 angeordnet, und um Drehmomente in beide Drehrichtungen abzusichern, sind die entsprechenden Scherstifte 3 paarweise, also links und rechts der Längsmitte 10, angeordnet.

In der Schnittdarstellung der Figur 1c ist ferner zu erkennen, dass sowohl der Fangbolzen 12, vor allem aber auch die Scherstifte 3, einen verbreiterten Kopf 3a am oberen Ende besitzen, mit dem sie auf der Oberseite der Basisplatte 1a aufsitzen, und dass dann auf das unten vorstehende freie Ende und ein dortiges Außengewinde eine Sicherungsmutter 18, 18' aufgeschraubt wird, die den Scherstift 3 in Position hält.

Für das Entfernen des Scherstiftes 3 muss folglich diese Sicherungsmutter 18 mittels eines Werkzeuges gelöst werden, und bei einem Bruch des Scherstiftes 3 fällt das untere Bruchstück mit der Sicherungsmutter 18 aus der Schleppstange 23 heraus auf den Untergrund.

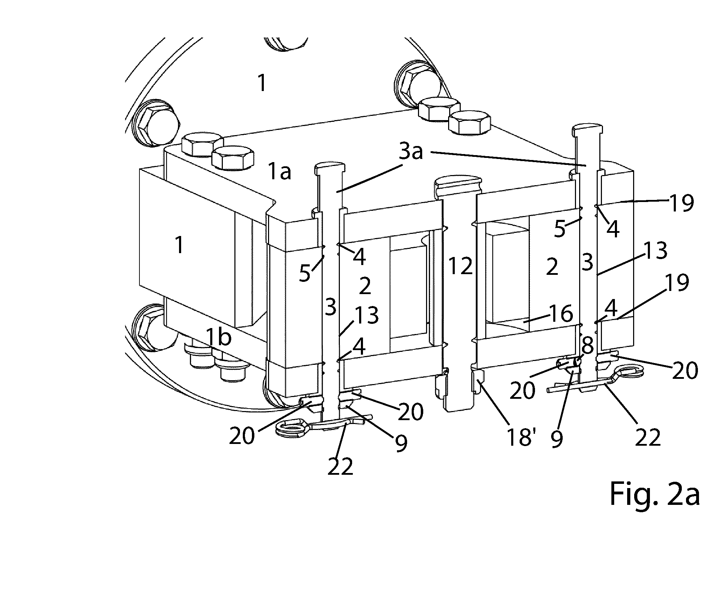

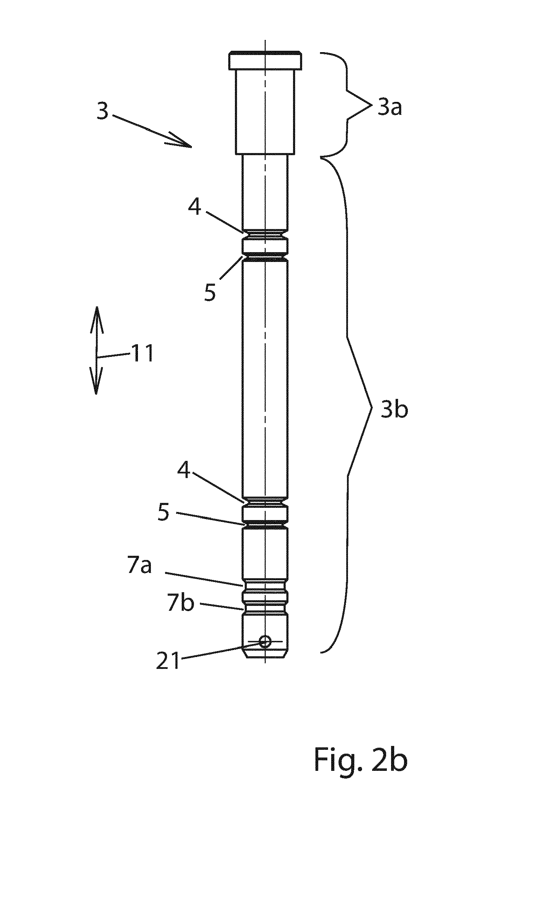

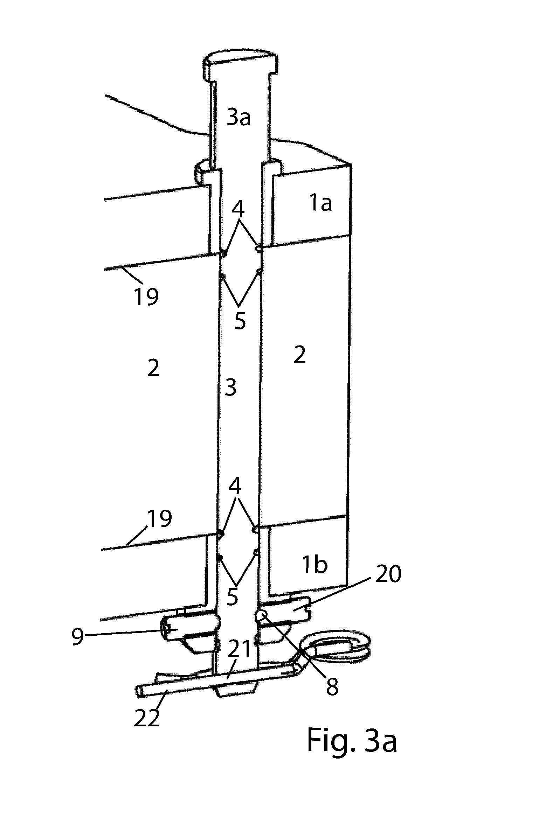

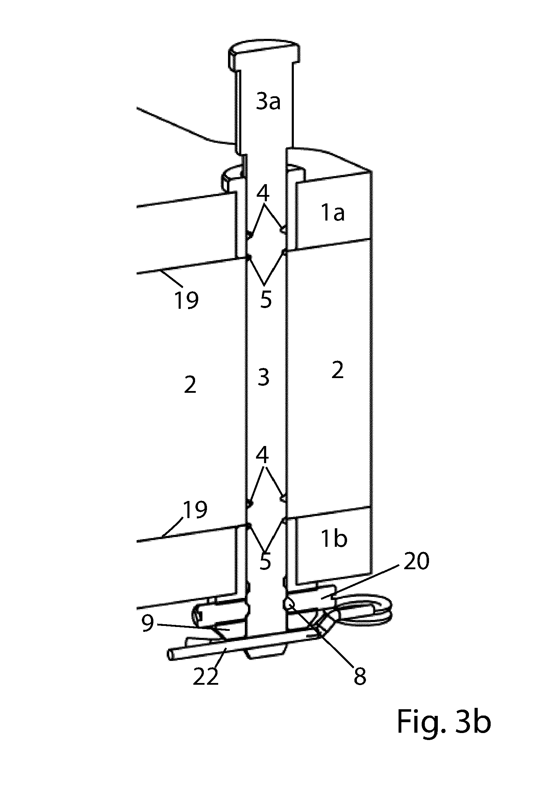

All diese Nachteile werden vermieden durch die erfindungsgemäße Lösung gemäß der Figuren 2 und 3:
Figur 2a zeigt den Schnitt durch die Verbindungsstelle analog zu Figur 1c, aber mit neuen, erfindungsgemäßen Scherstiften 3:
   Gegenüber Figur 1c fällt zunächst am Schleppkopf 2 auf, dass dort nur ein Paar von Durchgangsöffnungen 13 vorhanden ist, die darin aufgenommenen Scherstifte 3 jedoch für zwei verschiedene - bei Bedarf auch mehr als zwei verschiedene - Flugzeugtypen und Abscherwerte eingesetzt werden können: Wie Figur 2b zeigt, weist der Schaft 3b des Scherstiftes 3 zwei Paare von Scherkerben 4, 5 auf, wobei die Scherkerben jedes Paares zueinander immer den gleichen Abstand besitzen, nämlich den Abstand der Kontaktflächen 19 zwischen Basiskörper 1 und Schleppkopf 2. Die beiden Paare sind jedoch in Stiftrichtung 11 zueinander versetzt.

Zusätzlich sind nahe des freien, also vom Kopf 3a abgewandten, Ende des Schaftes 3b zwei Positionierkerben 7a, b in Schaft 3b angeordnet, deren Abstand dem Abstand der beiden Paare von Scherkerben 4, 5 entspricht.

Sowohl die Scherkerben 4, 5 als auch die Positionierkerben 7a, b sind um den in diesem Fall runden Scherstift 3 ringförmig umlaufende Nuten.

Die Scherkerben 4, 5 sind unterschiedlich tief. Dadurch wird der für das Einstellen unterschiedlicher Scherkräfte maßgebliche unterschiedliche Kernquerschnitt erreicht.

Wie die Figuren 3a und b zeigen, kann der Scherstift 3 auf zwei unterschiedlichen Höhen, also Positionen in Stiftrichtung 11, fixiert werden:
In Figur 3a sitzt der Scherstift 3 mit seinem Kopf 3a auf der Oberseite der oberen Basisplatte 1a bzw. einer darin eingesteckten Führungshülse 24 auf. Die beiden Scherkerben 4 des höher angeordneten Paares liegen dann auf Höhe der Kontaktflächen 19 und die obere Positionierkerbe 7a auf Höhe des Rastelementes 20, welches in radialer Richtung mit seiner vorderen, gegen die Mitte des Scherstiftes 3 vorgespannten, Stirnfläche, die beispielsweise eine Rastkugel 8 sein kann, in die Positionierkerbe 7a einrastet. Diese zwei einander gegenüber liegend bezüglich der Stiftrichtung 11 angeordneten Rastelemente 20 sind in einer Positionierhülse 9 geführt, die fest in der unteren Basisplatte 1 b angeordnet ist und zusätzlich den Scherstift 3 in Stiftrichtung 11 führt.

Der Kopf 3a des Scherstiftes 3 ist ausreichend lang ausgebildet und besitzt nahe seines Endes noch eine Verbreiterung, um gut mit der Hand ergriffen werden zu können und, wie in Figur 3b dargestellt, hochgezogen zu werden, so dass die Rastelemente 20 aus der oberen Positionierkerbe 7a herausgedrückt werden und bei weiterem Hochziehen des Scherstiftes 3 die untere Positionierkerbe 7b die Position der Rastelemente 20 erreicht, so dass diese dann in diese untere Positionierkerbe 7b einrasten.

Dann befinden sich die beiden Scherkerben 5 des tiefer liegenden Paares von Scherkerben auf Höhe der Kontaktflächen 19.

Ein noch weiteres Hochziehen oder gar vollständiges Herausziehen wird durch eine Auszugssicherung erreicht, die in diesem Fall in einer nahe des freien Endes, also noch unterhalb der Positionierkerben 7ab angeordneten Querbohrung 21 durch den Schaft 3b besteht, durch den ein Sicherungsstift 22 hindurch geschoben ist.

Stattdessen könnte auch eine Sicherungsmutter auf das freie Ende und ein dortiges Außengewinde aufgeschraubt werden, solange durch einen Abstand zwischen dem Ende des Außengewindes und der Positionierhülse 9 sichergestellt ist, dass auch bei vollständig aufgeschraubter Sicherungsmutter der Scherstift 3 nicht auf Zug durch die Sicherungsmutter belastet werden kann.

Die Figur 2b zeigt ferner, dass die beiden Scherkerben 4 mit dem tieferen Einstich in den Schaft 3b über den Scherkerben 5 mit weniger tiefem Einstich angeordnet sind.

Dadurch würde bei einer unbeabsichtigten, selbsttätigen Ausrastung der Rastelemente 20 schwerkraftbedingt der Scherstift 3 weiter nach unten sinken und dadurch sich keine höhere sondern eine geringere Abscherkraft unbeabsichtigt einstellen, so dass es nicht zu einer Beschädigung des Bugrades kommen kann.

Falls mehr als zwei unterschiedliche Abscherwerte in Form von Scherkerben bzw. Paaren von Scherkerben an einem Scherstift vorhanden sind, sind diese insgesamt so angeordnet, dass die nächst höher liegende Scherkerbe diejenige mit einem geringeren Abscherwert gegenüber der darunter liegenden ist.

Hinsichtlich der Ausgestaltung des Fangbolzens 12 und der ihn umgebenden Zentralöffnung 16 in dem Schleppkopf 2 entspricht dies der vorbekannten Lösung gemäß Figur 1 c.

### BEZUGSZEICHENLISTE

- 1: Basiskörper
- 1 a, b: Basisplatte
- 2: Schleppkopf
- 3: Scherstift
- 3a: Kopf
- 3b: Schaft
- 4: Scherkerbe
- 5: Scherkerbe
- 6: Querbohrung
- 7a, b: Positionierkerbe
- 8: Rastkugel
- 9: Positionierhülse
- 10: Längsrichtung, Längsmitte
- 11: Stiftrichtung
- 12: Fangbolzen
- 13: Durchgangsöffnung
- 14: Kupplung
- 15: Durchgangsöffnung
- 16: Zentralöffnung
- 18, 18': Sicherungsmutter
- 19: Kontaktfläche
- 20: Rastelement
- 21: Querbohrung
- 22: Sicherungsstift
- 23: Schleppstange
- 24: Führungshülse

## Patentansprüche

1. Schleppstange (23) für das Schleppen von Luftfahrzeugen an deren Bugfahrwerk mit
- einem Basiskörper (1),
- einem an dem Basiskörper (1) über wenigstens einen Scherstift (3) befestigten Schleppkopf (2),
- wobei der Scherstift (3) wenigstens eine Sollbruchstelle aufweist, und
- mit einer formschlüssigen Positioniervorrichtung zum Positionieren des Scherstiftes (3) in Stiftrichtung (11) im Schleppkopf (2),
**dadurch gekennzeichnet, dass**
- der wenigstens eine Scherstift (3) in Stiftrichtung (11) beabstandet mehrere Sollbruchstellen mit unterschiedlichen Abscherwerten aufweist,
- als Positioniervorrichtung eine kopfseitig oder endseitig am Scherstift (3) angeordnete Rastvorrichtung zwischen dem Scherstift (3) und dem Schleppkopf (2) vorhanden ist, die in Stiftrichtung (11) mehrere beabstandete Rastpositionen aufweist.

2. Schleppstange nach Anspruch 1,
**dadurch gekennzeichnet, dass**
die Sollbruchstelle durch eine quer zur Stiftrichtung (11) verlaufende Scherkerbe (4) im Außenumfang des Scherstiftes (3) gebildet wird, insbesondere durch eine über den gesamten Umfang umlaufende Scherkerbe (4, 5)

3. Schleppstange nach einem der vorhergehenden Ansprüche,
**dadurch gekennzeichnet, dass**
der Scherstift (3) eine runde Querschnittskontur besitzt sowie insbesondere einen verbreiterten Kopf (3a).

4. Schleppstange nach einem der vorhergehenden Ansprüche,
**dadurch gekennzeichnet, dass**
- der Scherstift, abgesehen vom verbreiterten Kopf (3a), einen gleich bleibenden Durchmesser bis auf den Bereich der Scherkerben (4, 5) besitzt, und/oder
- von Basiskörper (1) und Schleppkopf (2) das Ende eines der beiden Bauteile in das in Seitenansicht zum Basiskörper (1) betrachtet gabelförmige Ende des anderen Bauteiles hinein ragt und der Scherstift (3) im Abstand zwischen oberer und unterer Kontaktfläche des hineinragenden Bauteiles jeweils eine Scherkerbe (4, 5) mit gleichem Abscherwert vorhanden ist.

5. Schleppstange nach einem der vorhergehenden Ansprüche,
**dadurch gekennzeichnet, dass**
der Scherstift (3) zwei Paare von Scherkerben (4ab, 5ab) aufweist, wobei die Scherkerben eines Paares jeweils den Abstand der Kontaktflächen (19) des hineinragenden Bauteiles aufweisen und den gleichen Abscherwert besitzen, die Paare aber einen unterschiedlichen Abstand vom Kopf (3a) der Scherstiftes (3) aufweisen.

6. Schleppstange nach einem der vorhergehenden Ansprüche,
**dadurch gekennzeichnet, dass**
- der Scherstift (3) eine Auszugssicherung am dem Kopf (3a) gegenüberliegenden freien Ende aufweist, die insbesondere in einer Querbohrung (21) im Scherstift (3) zum Einschieben eines Sicherungsstiftes (22) besteht und/oder
- der Schaft (3b) des Scherstiftes (3) zwischen Kopf (3a) und Auszugssicherung länger ist als die Durchtrittsöffnung (13) durch ineinander gesteckten Basiskörper (1) und Schleppkopf (2).

7. Schleppstange nach einem der vorhergehenden Ansprüche,
**dadurch gekennzeichnet, dass**
- die Positioniervorrichtung quer zur Stiftrichtung (11) verlaufende Positionierkerben (7a, b), insbesondere ringförmig um den Umfang umlaufende Positionierkerben (7a, b), umfasst sowie wenigstens ein in die Positionierkerben (7a, b) hineinragendes und einrastendes Rastelement (2a), welches in Stiftrichtung (11) in fester Positionierung zum Schleppkopf (2) angeordnet ist, und/oder
- das Rastelement (2a) ein federvorgespannter Stift oder eine federnvorgespannte Rastkugel (8) ist, die in einer Positionierhülse (9) quer zur Stiftrichtung (11) geführt ist.

8. Schleppstange nach einem der vorhergehenden Ansprüche,
**dadurch gekennzeichnet, dass**
- Basiskörper (1) und Schleppkopf (2) zusätzlich über einen gegenüber dem wenigstens ein Scherstift (3) auf eine höhere Abscherkraft dimensionierten Fangbolzen (12) miteinander verbunden sind, der durch Basiskörper (1) als auch Schleppkopf (2) hindurch gesteckt ist, und/oder
- der Fangbolzen (12) auf der Längsmitte (10) des Basiskörpers (1) angeordnet ist und jeweils ein Scherstift (3) links und rechts der Längsrichtung (10) des Basiskörpers (1) im gleichen Abstand angeordnet ist.

9. Schleppstange nach einem der vorhergehenden Ansprüche,
**dadurch gekennzeichnet, dass**
- die Federkraft des Rastelementes (20) so bemessen ist, dass durch Verlagern des Scherstiftes (3) in Stiftrichtung (11) das eingerastete Rastelement (20) aus der Positionierkerbe (7a) ausrastet und ggf. in eine andere Positionierkerbe (7b) einrastet, wenn es diese erreicht, und/oder
- die Scherstifte (3) über Führungshülsen (24), von denen eine die Positionierhülse (9) sein kann, in den gabelförmigen Enden des Schleppkopfes (2) oder des Basiskörpers (1) geführt sind.

10. Schleppstange nach einem der vorhergehenden Ansprüche,
**dadurch gekennzeichnet, dass**
- der Kopf (3a) des Scherstiftes (3) an seinem freien Ende eine Schulter mit einer nochmaligen Durchmesserverbreiterung aufweist und der Kopf (3a) insbesondere als Zuggriff ausgebildet ist, beispielsweise in dem er einen durchgreifbaren Handgriff aufweist, und/oder
- die Auszugssicherung eine selbstsichernde Mutter ist.

11. Schleppstange nach einem der vorhergehenden Ansprüche,
**dadurch gekennzeichnet, dass**
der Basiskörper (1) und/oder der Schleppkopf (2) nur Durchgangsöffnungen (13) mit gleichem Durchmesser besitzen, und insbesondere auf jeder Seite bezüglich der Längsmitte des Fangbolzens (12) nur eine Durchgangsöffnung (13) aufweist.

12. Schleppstange nach einem der vorhergehenden Ansprüche,
**dadurch gekennzeichnet, dass**
- das eingeschobene Bauteil von Basiskörper (1) und Schleppkopf (2) in der Aufsicht betrachtet den Fangbolzen (12) ringförmig umgreift, und/oder
- am Schaft (3b) im oberen Bereich des Scherstiftes (3) Markierungen in Stiftrichtung (11) beabstandet angeordnet sind für den jeweiligen Flugzeugtyp.

13. Schleppstange nach einem der vorhergehenden Ansprüche,
**dadurch gekennzeichnet, dass**
das endseitige Außengewinde auf dem Schaft (3b) des Scherstiftes (3) zum Aufschrauben einer Sicherungsmutter (18) als Auszugssicherung im Abstand vor der Außenfläche des Schleppkopfes (2), insbesondere der Positionierhülse (9), endet.

14. Schleppstange nach einem der vorhergehenden Ansprüche,
**dadurch gekennzeichnet, dass**
die einen geringeren Abscherwert repräsentierenden Scherkerben bzw. Paare von Scherkerben (4) über den entsprechenden Scherkerben (5) mit höherem Abscherwert angeordnet sind.

## Claims

1. A tow bar for towing aircraft at their nose gear, the tow bar comprising
- a base element (1);
- a tow head (2) attached at the base element (1) through at least one shear pin (3),
- wherein the shear pin (3) has at least one rated fracture joint, and
- a form locking positioning device for positioning the shear pin (3) in a shear pin direction (11) in the tow head (2),
**characterized in that**
- the at least one shear pin (3) includes plural rated fracture joints with different shear ratings that are offset in a pin direction (11),
- an interlocking device is arranged as a positioning device at a head or at an end of the shear pin (3) between the shear pin (3) and the tow head (2) wherein the interlocking device includes plural interlocking positions that are offset in the pin direction (11).

2. The tow bar according to claim 1, **characterized in that** the rated fracture joint is formed by a shear notch (4) in an outer circumference of the shear pin (3) wherein the shear notch extends transversal to the pin direction (11), wherein the shear notch extends in particular over an entire circumference of the shear pin.

3. The tow bar according to one of the preceding claims, **characterized in that** the shear pin (3) has a circular cross sectional contour and in particular a broadened head (3a).

4. The tow bar according to one of the preceding claims, **characterized in that**
- the shear pin, besides the broadened head (3a), has a constant diameter besides a portion of the shear notches (4, 5), and/or
- of the base element (1) and the tow head (2) an end of one of the two components reaches into a fork shaped end of the other component in a side view of the base element (1) and the shear pin (3) is provided at a distance between an upper and a lower contact surface of the inward protruding component respectively with a shear notch (4, 5) with identical shear value.

5. The tow bar according to one of the preceding claims, **characterized in that** the shear pin (3) has three pairs of shear notches (4ab, 5ab) wherein the shear notches of a pair respectively have a distance of contact surfaces (19) of the inward protruding component and have the same shear value, but the pairs have a different distance from a head (3a) of the shear pin (3).

6. The tow bar according to one of the preceding claims, **characterized in that**
- the shear pin (3) has a pullout safety at a free end opposite to the head (3a) wherein the pullout safety includes in particular a transversal borehole (21) in the shear pin (3) for inserting a safety pin (22), and/or
- the shaft (3b) of the shear pin (3) between the head (3a) and the pullout safety is longer than the pass through opening (13) through the base element (1) and the tow head (2) inserted into one another.

7. The tow bar according to one of the preceding claims, **characterized in that**
- the positioning device has positioning notches (7a, b) extending transversal to the pin direction (11), in particular positioning notches (7a, b) extending in an annular manner about a circumference and at least one engagement element (2a) reaching into the positioning notches (7a, b) and interlocking therein, wherein the interlocking element is arranged in the pin direction (11) at a fixed positioning relative to the tow head (2), and/or
- the interlocking element (2a) is a spring preloaded pin or a spring preloaded interlocking ball (8) which is supported in a positioning sleeve (9) transversal to the pin direction (11).

8. The tow bar according to one of the preceding claims, **characterized in that** the base element (1) and the tow head (2) are additionally connected with one another by a catch bolt (12) that has a higher shear force compared to the at least one shear pin (3), wherein the catch bolt is inserted through the base element (1) and also through the tow head (2), and/or the catch bolt (12) is arranged on a longitudinal center (10) of the base element (1) and a respective shear pin (3) is arranged at the same distance on a left side and on a right side of the longitudinal direction (10) of the base element (1).

9. The tow bar according to one of the preceding claims, **characterized in that**
- a spring force of the interlocking element (20) is sized so that the interlocked interlocking element (20) disengages from the positioning notch (7a) by displacing the shear pin (3) in the pin direction (11) and optionally interlocks in another positioning groove (7b) when it reaches the other positioning groove (7b), and/or
- the shear pins (3) are supported in the fork shaped ends of the tow head (2) or of the base element (1) by support sleeves (24) wherein one of the support sleeves can be the positioning sleeve (9).

10. The tow bar according to one of the preceding claims, **characterized in that**
- the head (3a) of the shear pin (3) has a shoulder with another diameter enlargement at its free end and the head (3a) is configured in particular as a pull handle, for example **in that** it includes a reach through handle, and/or
- the pullout safety is a self-locking nut.

11. The tow bar according to one of the preceding claims, **characterized in that** the base element (1) and/or the tow head (2) only have pass through openings (13) with identical diameters, and in particular includes only one pass through opening (13) in particular on each side with respect to the longitudinal center of the catch bolt (12).

12. The tow bar according to one of the preceding claims, **characterized in that**
- the inserted component of the base element (1) and tow the head (2) reaches around the catch bolt (12) in an annular manner in top view, and/or
- markings that are offset in pin direction (11) are arranged at the shaft (3b) in an upper portion of the shear pin (3) wherein the markings are configured for a respective aircraft type.

13. The tow bar according to one of the preceding claims, **characterized in that** an end side outer thread terminates on the shaft (3b) of the shear pin (3) for threading on a safety nut (18) as a pullout safety at a distance in front of the outer surface of the tow head (2), in particular of the position sleeve (9).

14. The tow bar according to one of the preceding claims, **characterized in that** shear notches or pairs of shear notches (4) with lower shear value are arranged above respective shear notches (5) with a higher shear value.

## Revendications

1. Barre de remorquage (23) pour le remorquage d'aéronefs par leur train d'atterrissage avant, comprenant :
- un corps de base (1) ;
- une tête de remorquage (2) fixée sur le corps de base (1) via au moins une goupille de cisaillement (3),
- dans laquelle la goupille de cisaillement (3) présente au moins un point de rupture et
- avec un dispositif de positionnement à adaptation de formes pour positionner la goupille de cisaillement (3) dans la direction de la goupille (11) dans la tête de remorquage (2),
**caractérisée en ce que** :
- la au moins une goupille de cisaillement (3) présente, espacés dans la direction de la goupille (11), plusieurs points de rupture avec différentes valeurs de cisaillement,
- il est prévu comme dispositif de positionnement un dispositif d'arrêt aménagé côté tête ou côté extrémité sur la goupille de cisaillement (3) entre la goupille de cisaillement (3) et la tête de remorquage (2), qui présente plusieurs positions d'arrêt espacées dans la direction de la goupille (11).

2. Barre de remorquage selon la revendication 1,
**caractérisée en ce que**:
le point de rupture est formé par une encoche de cisaillement (4) s'étendant transversalement à la direction de la goupille (11) sur la périphérie externe de la goupille de cisaillement (3), en particulier par une encoche de cisaillement (4, 5) courant sur toute la périphérie.

3. Barre de remorquage selon l'une quelconque des revendications précédentes,
**caractérisée en ce que**:
la goupille de cisaillement (3) possède un contour rond en coupe transversale ainsi qu'en particulier une tête élargie (3a).

4. Barre de remorquage selon l'une quelconque des revendications précédentes,
**caractérisée en ce que** :
- La goupille de cisaillement possède, en dehors de la tête élargie (3a), un diamètre qui reste égal jusque sur la zone des encoches de cisaillement (4, 5), et/ou
- du corps de base (1) et de la tête de remorquage (2) s'insère l'extrémité d'un des deux composants dans l'extrémité de l'autre composant en forme d'étrier en vue latérale par rapport au corps de base (1) et la goupille de cisaillement (3) présente dans l'espacement entre les surfaces de contact supérieure et inférieure du composant inséré, respectivement, une encoche de cisaillement (4, 5) de même valeur de cisaillement.

5. Barre de remorquage selon l'une quelconque des revendications précédentes,
**caractérisée en ce que** :
la goupille de cisaillement (3) présente deux paires d'encoches de cisaillement (4ab, 5ab), dans lequel les encoches de cisaillement d'une paire présentent, respectivement, l'espacement des surfaces de contact (19) du composant inséré et possèdent la même valeur de cisaillement, mais les paires présentent un espacement différent de la tête (3a) de la goupille de cisaillement (3).

6. Barre de remorquage selon l'une quelconque des revendications précédentes,
**caractérisée en ce que** :
- la goupille de cisaillement (3) présente une sécurité anti-extraction à l'extrémité libre opposée à la tête (3a), qui consiste en particulier en une perforation transversale (21) dans la goupille de cisaillement (3) pour y faire glisser une goupille de sécurité (22) et/ou
- la tige (3b) de la goupille de cisaillement (3) est plus longue entre la tête (3a) et la sécurité anti-extraction que l'ouverture de passage (13) à travers le corps de base (1) et la barre de remorquage (2) enfichées l'un(e) dans l'autre.

7. Barre de remorquage selon l'une quelconque des revendications précédentes,
**caractérisée en ce que** :
- le dispositif de positionnement comprend des encoches de positionnement (7a, b) s'étendant transversalement à la direction de la goupille (11), en particulier des encoches de positionnement (7a, b) courant en forme annulaire sur la périphérie, ainsi qu'au moins un élément (2a) qui s'insère et se verrouille dans les encoches de positionnement (7a, b) et qui est aménagé dans la direction de la goupille (11) en positionnement fixe par rapport à la tête de remorquage (2), et/ou
- l'élément d'arrêt (2a) est une goupille pré-sollicitée par un ressort ou une bille d'arrêt (8) pré-sollicitée par un ressort, qui est guidée dans une douille de positionnement (9) transversalement à la direction de la goupille (11).

8. Barre de remorquage selon l'une quelconque des revendications précédentes,
**caractérisée en ce que** :
- le corps de base (1) et la tête de remorquage (2) sont en outre reliés l'un à l'autre via un boulon de sûreté (12) dimensionné vis-à-vis de la au moins une goupille de cisaillement (3) à une force de cisaillement plus élevée, lequel boulon est enfiché à travers le corps de base (1) ainsi qu'à travers la tête de remorquage (2) et/ou
- le boulon de sûreté (12) est aménagé au centre longitudinal (10) du corps de base (1) et, respectivement, une goupille de cisaillement (3) est disposée à gauche et à droite de la direction longitudinale (10) du corps de base (1) dans le même espacement.

9. Barre de remorquage selon l'une quelconque des revendications précédentes,
**caractérisée en ce que** :
- la force élastique de l'élément d'arrêt (20) est mesurée de sorte que, par déplacement de la goupille de cisaillement (3) dans la direction de la goupille (11), l'élément d'arrêt enclenché (20) se dégage de l'encoche de positionnement (7a) et, éventuellement, s'engage dans une autre encoche de positionnement (7b) lorsqu'il atteint celle-ci, et/ou
- les goupilles de cisaillement (3) sont guidées via des douilles de guidage (24), dont l'une peut être la douille de positionnement (9), dans les extrémités en forme d'étrier de la tête de remorquage (2) ou du corps de base (1).

10. Barre de remorquage selon l'une quelconque des revendications précédentes,
**caractérisée en ce que** :
- la tête (3a) de la goupille de cisaillement (3) présente à son extrémité libre un épaulement avec une autre extension de diamètre et la tête (3a) est conformée en particulier en poignée de traction, par exemple dans lequel elle présente une poignée manuelle manipulable, et/ou
- la sécurité anti-extraction est un écrou autobloquant.

11. Barre de remorquage selon l'une quelconque des revendications précédentes,
**caractérisée en ce que** :
le corps de base (1) et/ou la tête de remorquage (2) ne présente(nt) que des ouvertures de passage (13) de même diamètre et, en particulier, ne présente(nt qu'une ouverture de passage (13) de chaque côté par rapport au centre longitudinal du boulon de sûreté (12).

12. Barre de remorquage selon l'une quelconque des revendications précédentes,
**caractérisée en ce que** :
- le composant enfiché du corps de base (1) et de la tête de remorquage (2) en vue de dessus enveloppe (12) en forme annulaire le boulon de sûreté, et/ou
- on aménage sur la tige (3b) dans la zone supérieure de la goupille de cisaillement (3) des marques espacées dans la direction de la goupille (11) pour le type d'aéronef respectif.

13. Barre de remorquage selon l'une quelconque des revendications précédentes,
**caractérisée en ce que** :
le filet externe côté extrémité sur la tige (3b) de la goupille de cisaillement (3) pour le vissage d'un écrou de sécurité (18) comme sécurité anti-extraction se termine à distance devant la surface externe de la tête de remorquage (2), en particulier de la douille de positionnement (9).

14. Barre de remorquage selon l'une quelconque des revendications précédentes,
**caractérisée en ce que** :
les encoches de cisaillement ou les paires d'encoches de cisaillement (4) représentant une plus faible valeur de cisaillement sont ménagées sur les encoches de cisaillement correspondantes (5) avec une valeur de cisaillement plus élevée.
